# EUROPÄISCHE PATENTSCHRIFT

(11) **EP 4 053 440 B1**
(45) Veröffentlichungstag und Bekanntmachung des Hinweises auf die Patenterteilung: **20.12.2023**
(21) Anmeldenummer: 22157326.4
(22) Anmeldetag: 17.02.2022
(51) Int. Cl.: F16K 15/16, F04B 39/10, F16K 17/02, B01D 35/147

(54) **VENTILEINHEIT, FILTERKOPF FÜR EINE VENTILEINHEIT UND FILTERSYSTEM**
VALVE UNIT, FILTER HEAD FOR A VALVE UNIT AND FILTER SYSTEM
UNITÉ DE SOUPAPE, TÊTE DE FILTRE POUR UNE UNITÉ DE SOUPAPE ET SYSTÈME DE FILTRE

(30) Priorität: 05.03.2021 DE 102021105373
(43) Veröffentlichungstag der Anmeldung: 07.09.2022
(73) Patentinhaber: MANN+HUMMEL GmbH, 71636 Ludwigsburg (DE)
(72) Erfinder: PITTL, Michal, 58854 Mrakotin (CZ); WEINDORF, Martin, 70806 Kornwestheim (DE)
(74) Vertreter: Mann + Hummel Intellectual Property

(56) Entgegenhaltungen:
- CN-A- 101 084 050
- DE-A1- 1 956 259
- DE-A1-102005 005 473
- DE-B2- 1 956 259
- KR-A- 20080 096 236
- US-A1- 2002 157 717

## Beschreibung

### Technisches Gebiet

Die Erfindung betrifft eine Ventileinheit. Ebenso betrifft die Erfindung einen Filterkopf für eine Ventileinheit sowie ein Filtersystem mit einem Filterkopf und einer Ventileinheit, insbesondere zur Flüssigkeitsfiltration.

### Stand der Technik

Aus DE 202005021795 U1 ist eine Ventileinheit bekannt, mit einem plattenförmigen Ventilkörper und einer Verschlusslasche, die eine Öffnung abdeckt. Bauteile dieser Art werden als Federblechventile für gasförmige oder flüssige Medien eingesetzt, etwa als Unterdruckventil oder Überdruckventil.

Die DE 10 2005 005 473 A1 bezieht sich auf ein einteiliges Federblechventil, das aus einem plattenförmigen Blechbauteil mit einem Ventilsitz und einer Verschlusslasche besteht, wobei die Verschlusslasche eine Öffnung abdeckt und bei anliegendem Öffnungsdruck abhebt. Das Blechbauteil weist einen Befestigungsabschnitt auf und die Verschlusslasche ist durch eine umlaufende Trennfuge gebildet, die an der zum Befestigungsabschnitt gegenüberliegenden Seite durch eine biegesteife Verbindungsstelle unterbrochen ist.

Die US 2002/157717 A zeigt eine Ventilanordnung eines geschlossenen Kolbenkompressors. Die Ventilanordnung umfasst eine Ventilplatte, die zwischen einem Zylinderkörper und einem Zylinderkopf angeordnet ist, ein Zungenventil zum Öffnen und Abdichten eines an der Ventilplatte ausgebildeten Kältemittelauslasslochs, einen ersten Stopper zum Widerstehen gegen eine Biegekraft des gebogenen Zungenventils, wenn das Kühlmittel ausgelassen wird.

Der KR 2008 0096236 A1 ist ein Kompressor vom hermetischen Typ zu entnehmen. Eine Kompressionskammer umfasst ein Ansaugloch zum Verbinden einer Kühlmittelansaugkammer und einer Kühlmittelausstoßkammer, eine Ventilplatte, auf der ein Ausstoßloch ausgebildet ist; ein Saugventil, das das Saugloch öffnet und schließt und eine Auslassventilanordnung, die das Auslassloch öffnet und schließt. Die Auslassventilanordnung umfasst ein Auslassleitungsventil.

Die CN 101 084 05 0A zeigt Flüssigkeitsfilterkonstruktionen, bei denen leckagefreie Rückschlagventilanordnungen vorgesehen sind. Bei der gezeigten Konstruktion ist die lecksichere Rückschlagventileinheit so konstruiert, dass die Ventileinheit nur dann Flüssigkeit durch den Filterkopf strömen lässt, wenn die Filterpatrone mit Hilfe des Filterkopfes richtig in der Filtereinheit positioniert ist.

### Offenbarung der Erfindung

Eine Aufgabe der Erfindung ist es, eine verbesserte Ventileinheit nach Anspruch 1 zu schaffen, die eine verbesserte Dichtigkeit eines Ventils erlaubt und eine verbesserte Druckstabilität in Sperrrichtung der Ventileinheit aufweist. Diese Ventileinheit kann in einer Reihe unterschiedlicher Fluidsysteme in vielseitigen Anwendungen eingesetzt werden, beispielsweise in einem Filtersystem zur Brennstoffversorgung einer Brennkraftmaschine.

Eine weitere Aufgabe der Erfindung ist, einen Filterkopf nach Anspruch 8 für eine Ventileinheit mit verbesserter Dichtigkeit und einem möglichst geringem Druckverlust zu schaffen.

Eine weitere Aufgabe der Erfindung ist, ein Filtersystem nach Anspruch 11 mit einem Filterkopf und einer Ventileinheit mit verbesserter Dichtigkeit anzugeben.

Eine weitere Aufgabe der Erfindung ist es, ein Filtersystem mit einem druckverlustoptimierten Filterkopf und einer Ventileinheit mit verbesserter Dichtigkeit und einer verbesserten Druckstabilität in Sperrrichtung der Ventileinheit anzugeben, wobei die Druckstabilität in Sperrrichtung vorteilhaft ist beim Befüllen des Kraftstoffsystems.

Die vorgenannten Aufgaben werden nach einem Aspekt der Erfindung gelöst mit einer Ventileinheit, mit einem plattenförmigen Ventilkörper, der einen Verschlussabschnitt und einen Verbindungsabschnitt aufweist, wobei der Ventilkörper einen Rahmen umfasst, der einen Durchbruch im Ventilkörper umschließt, wobei der Verschlussabschnitt eine Verschlusslasche aufweist, die ausgehend von einem ersten Befestigungsabschnitt am Rahmen in den Durchbruch ragt, wobei der Verbindungsabschnitt eine Kontaktlasche aufweist und ausgehend von einem zweiten Befestigungsabschnitt am Rahmen in den Durchbruch ragt, und der Verbindungsabschnitt wenigstens einen Befestigungspunkt aufweist, und wobei der erste Befestigungsabschnitt und der zweite Befestigungsabschnitt entlang einer Längsachse des Ventilkörpers sich am Rahmen gegenüberliegend angeordnet sind.

Nach einem weiteren Aspekt der Erfindung werden die Aufgaben gelöst durch einen Filterkopf für eine erfindungsgemäße Ventileinheit, umfassend einen Ventilsitz zum Anlegen eines Dichtkörpers eines Verschlussabschnitts der Ventileinheit, einen Befestigungszapfen zur Befestigung eines Verbindungsabschnitts der Ventileinheit, sowie einen Kontaktbereich für einen Positionierbereich der Ventileinheit.

Nach einem weiteren Aspekt der Erfindung werden die Aufgaben gelöst durch ein Filtersystem mit einem Gehäuse, in dem eine erfindungsgemäße Ventileinheit und ein erfindungsgemäßer Filterkopf angeordnet ist.

Günstige Ausgestaltungen und Vorteile der Erfindung ergeben sich aus den weiteren Ansprüchen, der Beschreibung und der Zeichnung.

Es wird nach einem Aspekt der Erfindung eine Ventileinheit vorgeschlagen, mit einem plattenförmigen Ventilkörper, der einen Verschlussabschnitt und einen Verbindungsabschnitt aufweist. Der Ventilkörper umfasst einen Rahmen, der einen Durchbruch im Ventilkörper umschließt. Der Verschlussabschnitt weist eine Verschlusslasche auf, die ausgehend von einem ersten Befestigungsabschnitt am Rahmen in den Durchbruch ragt. Der Verbindungsabschnitt weist eine Kontaktlasche auf und ragt ausgehend von einem zweiten Befestigungsabschnitt am Rahmen in den Durchbruch. Der Verbindungsabschnitt weist wenigstens einen Befestigungspunkt auf. Der erste Befestigungsabschnitt und der zweite Befestigungsabschnitt sind entlang einer Längsachse des Ventilkörpers sich am Rahmen gegenüberliegend angeordnet.

Günstigerweise erlaubt die Kontaktlasche eine günstige Verformung, die eine Vorspannung für die Verschlusslasche erzeugt. An der Verschlusslasche ist ein Dichtmittel angeordnet, das zum Kontakt mit einem Ventilsitz vorgesehen ist und das durch die Vorspannung zuverlässig zur Anlage am Ventilsitz gebracht werden kann. In Fällen, in denen die Ventileinheit nach der Montage bestimmungsgemäß unterhalb des Ventilsitzes angeordnet ist, wird ein ungünstiges Absinken der Verschlusslasche etwa unter Gravitationseinwirkung und damit ein bereichsweises Lösen des Dichtmittels vom Ventilsitz vermieden.

Der Befestigungspunkt kann eine formschlüssige und/oder kraftschlüssige Verbindung zu einem Filterkopf vorsehen, etwa eine Schraubverbindung, eine Klemmverbindung, eine Schweißverbindung oder dergleichen, mit der die Kontaktlasche mit einem Filterkopf stabil verbunden werden kann.

Nach einer günstigen Ausgestaltung der Ventileinheit kann der wenigstens eine Befestigungspunkt des Verbindungsabschnitts auf der Längsachse angeordnet sein. Vorteilhaft kann ein günstiges Kraft-Verhältnis von durch die Laschen gebildeten Hebeln erreicht werden.

Nach einer günstigen Ausgestaltung der Ventileinheit kann der wenigstens eine Befestigungspunkt als Durchgangsöffnung ausgebildet sein. Optional kann der wenigstens eine Befestigungspunkt eine als Klemmelement ausgebildete Durchgangsöffnung aufweisen. Durch eine Klemmverbindung kann die Ventileinheit im Wesentlichen werkzeuglos und ohne zusätzliches Befestigungselement am Filterkopf, beispielsweise an einem Zapfen, befestigt werden. Es kann eine Klemmverbindung in der Art einer Sicherungsscheibe vorgesehen sein, bei der Zähne an der Durchgangsöffnung nach innen weisen, die an der Außenseite des Zapfens unter Spannung anliegen.

Nach einer günstigen Ausgestaltung der Ventileinheit kann der Verbindungsabschnitt wenigstens einen Positionierbereich aufweisen, der beispielsweise auf der Längsachse angeordnet ist. Dies ermöglicht, ein Verdrehen der Ventileinheit um den Befestigungspunkt zu verhindern.

In einer alternativen Ausgestaltung kann der Positionierbereich von der Längsachse beabstandet angeordnet sein.

Nach einer günstigen Ausgestaltung der Ventileinheit kann der Positionierbereich als Durchgangsöffnung ausgebildet sein. Optional kann der Positionierbereich als Durchgangsöffnung ausgebildet sein, die sich insbesondere entlang der Längsachse als Langloch erstreckt. Vorteilhaft kann die größere Längserstreckung des Langlochs in Richtung der Längsachse gerichtet sein. Dies erlaubt einen Ausgleich von Toleranzen sowie ein ausreichendes Spiel bei einer gewünschten Verformung bei einer Auslenkung des Verbindungsabschnitts.

Nach einer günstigen Ausgestaltung der Ventileinheit kann der Ventilkörper aus Metall gebildet sein. Dies erlaubt eine einfache Herstellung beispielsweise mittels Ausstanzen aus Blech oder mittels Laserbearbeitung von Blech. Vorteilhaft kann die metallische Verschlusslasche des Verschlussabschnitts einen stabilen Träger eines Dichtelements bilden.

Nach einer günstigen Ausgestaltung der Ventileinheit kann der Verschlussabschnitt einen Dichtkörper, insbesondere aus einem Elastomer, aufweisen. Optional kann der Verschlusskörper einen Dichtkörper aus einem Elastomer aufweisen, der an der Verschlusslasche oder um die Verschlusslasche herum angeordnet ist, insbesondere angespritzt ist. Vorteilhaft kann die Verschlusslasche mit Material des Dichtkörpers umspritzt sein. Dies ermöglicht ein stabil gelagertes, robustes Dichtelement, das auch höhere Gegendrücke in Sperrrichtung aushält, wie sie beim Befüllen des Kraftstoffsystems mit Kraftstoff auftreten.

Nach einem weiteren Aspekt der Erfindung wird ein Filterkopf für eine Ventileinheit vorgeschlagen. Die Ventileinheit weist einen plattenförmigen Ventilkörper auf, der einen Verschlussabschnitt und einen Verbindungsabschnitt aufweist. Der Ventilkörper umfasst einen Rahmen, der einen Durchbruch im Ventilkörper umschließt. Der Verschlussabschnitt weist eine Verschlusslasche auf, die ausgehend von einem ersten Befestigungsabschnitt am Rahmen in den Durchbruch ragt. Der Verbindungsabschnitt weist eine Kontaktlasche auf und ragt ausgehend von einem zweiten Befestigungsabschnitt am Rahmen in den Durchbruch. Der Verbindungsabschnitt weist wenigstens einen Befestigungspunkt auf. Der erste Befestigungsabschnitt und der zweite Befestigungsabschnitt sind entlang einer Längsachse des Ventilkörpers sich am Rahmen gegenüberliegend angeordnet. Der Filterkopf umfasst einen Ventilsitz zum Anlegen eines Dichtkörpers des Verschlussabschnitts der Ventileinheit, einen Befestigungszapfen zur Befestigung des Verbindungsabschnitts der Ventileinheit, sowie einen Kontaktbereich für den Positionierbereich der Ventileinheit.

Vorteilhaft kann der Filterkopf so ausgestaltet sein, dass bei montierter Ventileinheit automatisch eine definierte Vorspannung des Verschlussabschnitts gegen den Ventilsitz generiert wird. Dies verbessert die Dichtigkeit des Ventils.

Nach einer günstigen Ausgestaltung des Filterkopfs kann der Kontaktbereich eine Basis für den Positionierbereich der Ventileinheit aufweisen, die von einer der Ventileinheit im montierten Zustand bestimmungsgemäß zugewandten Oberfläche weiter absteht als eine Basis des Befestigungszapfens, an der der Verbindungsabschnitt im Kontaktbereich seines Befestigungspunkts bestimmungsgemäß zur Anlage kommt. Hierdurch sind die Bereiche der Kontaktlasche des Ventilkörpers, die in Kontakt mit dem Filterkopf sind, auf verschiedenen Höhen angeordnet, so dass eine Verformung der Kontaktlasche erfolgt. Der dem Befestigungsabschnitt mit dem Rahmen des Ventilkörpers nähere Bereich der Kontaktlasche steht weiter von der Oberfläche des Filterkopfs ab als der dem freien Ende der Kontaktlasche nähere Bereich. Hierdurch kann eine günstige Vorspannung am Verschlussabschnitt und dessen Verschlusslasche generiert werden.

Nach einer günstigen Ausgestaltung des Filterkopfs kann bei bestimmungsgemäßer Montage der Ventileinheit und verschlossenem Ventilsitz eine Verschlusslasche des Verschlussabschnitts und eine Kontaktlasche des Verbindungsabschnitts zu verschiedenen Seiten des Rahmens ausgelenkt sein. Dies erlaubt eine günstige Einstellung von Anlagekräften und der Vorspannung des Verschlussabschnitts am Ventilsitz.

Nach einem weiteren Aspekt der Erfindung wird ein Filtersystem vorgeschlagen mit einem Gehäuse, in dem eine Ventileinheit und ein Filterkopf angeordnet sind. Die Ventileinheit weist einen plattenförmigen Ventilkörper auf, der einen Verschlussabschnitt und einen Verbindungsabschnitt aufweist. Der Ventilkörper umfasst einen Rahmen, der einen Durchbruch im Ventilkörper umschließt. Der Verschlussabschnitt weist eine Verschlusslasche auf, die ausgehend von einem ersten Befestigungsabschnitt am Rahmen in den Durchbruch ragt. Der Verbindungsabschnitt weist eine Kontaktlasche auf und ragt ausgehend von einem zweiten Befestigungsabschnitt am Rahmen in den Durchbruch. Der Verbindungsabschnitt weist wenigstens einen Befestigungspunkt auf. Der erste Befestigungsabschnitt und der zweite Befestigungsabschnitt sind entlang einer Längsachse des Ventilkörpers sich am Rahmen gegenüberliegend angeordnet. Der Filterkopf umfasst einen Ventilsitz zum Anlegen eines Dichtkörpers des Verschlussabschnitts der Ventileinheit, einen Befestigungszapfen zur Befestigung des Verbindungsabschnitts der Ventileinheit, sowie einen Kontaktbereich für den Positionierbereich der Ventileinheit.

Nach einer günstigen Ausgestaltung des Filtersystems kann dieses zur Verwendung als Vorfilter in einem Brennstoffversorgungssystem vorgesehen sein. Vorteilhaft kann durch die Vorspannung des Verschlussabschnitts eine verbesserte Dichtigkeit der Ventileinheit erreicht werden. Ferner kann ein günstiger geringer Druckverlust erzielt werden, da der Verschlussabschnitt große Durchmesser von Strömungskanälen abdecken kann. Der Durchmesser des Verschlussabschnitts kann bei der Herstellung des Ventilkörpers einfach an einen gewünschten Ventilsitz angepasst werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Figur 1: eine Ansicht eines Filtersystems in Form eines Kraftstoffvorfilters mit Filtertopf und Filterkopf nach einem Ausführungsbeispiel der Erfindung;
- Figur 2: eine Draufsicht auf den Filterkopf nach Figur 1 mit einer Ventileinheit nach einem Ausführungsbeispiel der Erfindung;
- Figur 3: eine Draufsicht auf einen Ventilkörper einer Ventileinheit nach einem Ausführungsbeispiel der Erfindung;
- Figur 4: eine perspektivische Ansicht einer Ventileinheit mit einem Ventilkörper nach Figur 3;
- Figur 5: eine perspektivische Draufsicht auf eine Ventileinheit und einen Ausschnitt aus dem Filterkopf nach Figur 1 mit Ventileinheit;
- Figur 6: eine Seitenansicht des Ausschnitts des Filterkopfs mit Ventileinheit nach Figur 5;
- Figur 7: ein Längsschnitt durch den Ausschnitt des Filterkopfs mit Ventileinheit nach Figur 5.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

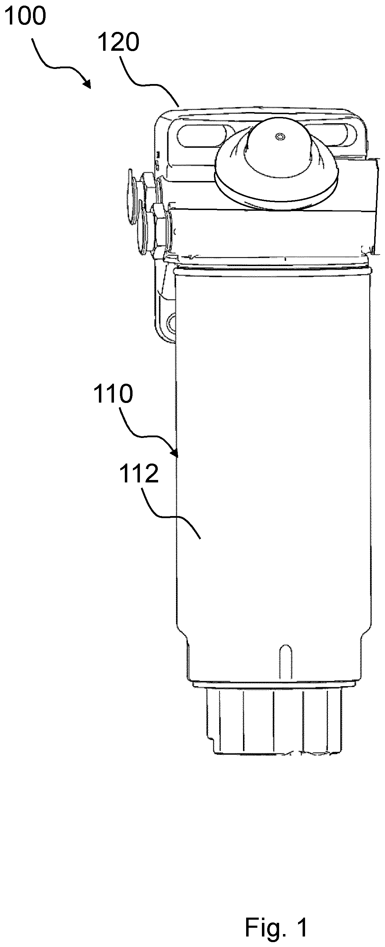

Zur Erläuterung der Erfindung zeigt Figur 1 ein Ausführungsbeispiel eines Filtersystems 100 mit einem Gehäuse 110, umfassend einen Filtertopf 112 mit auswechselbarem Filterelement (nicht dargestellt) und einen Filterkopf 120. Zum Wechsel des Filterelements kann der Filtertopf 112 von dem Filterkopf 120 getrennt werden. Das Filtersystem 100 kann beispielsweise als Vorfilter in einem Brennstoffversorgungssystem eines Nutzfahrzeugs vorgesehen sein. Andere Einsatzgebiete sind beispielsweise Industriemaschinen und dergleichen. Auch ein Einsatz der Ventileinheit in anderen Fluidsystemen auf anderen Anwendungsfeldern kann vorgesehen sein.

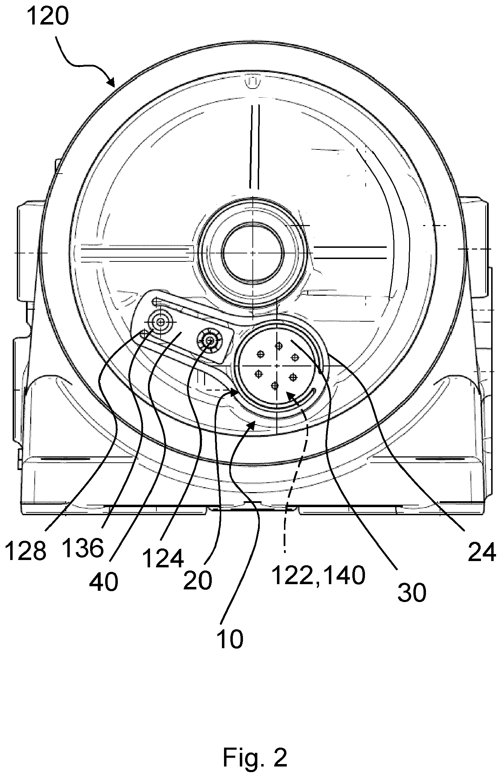

Figur 2 zeigt eine Draufsicht auf den Filterkopf 120 nach Figur 1 mit einer Ventileinheit 10 nach einem Ausführungsbeispiel der Erfindung. Die Ventileinheit 10 umfasst einen plattenförmigen Ventilkörper 20, beispielsweise aus metallischem Blech, der einen Verschlussabschnitt 30 und einen Verbindungsabschnitt 40 aufweist. Verschlussabschnitt 30 und Verbindungsabschnitt 40 sind von einem Rahmen 24 umgeben.

Der Verschlussabschnitt 30 deckt einen in der Figur nicht erkennbaren Ventilsitz 122 an einem Durchgang zu einer nicht erkennbaren Fluidleitung 140 im Filterkopf 120 ab. In der Draufsicht sind drei weitere nicht näher bezeichnete Durchgänge zu Fluidleitungen erkennbar. Wird bei geschlossenem Filtersystem 100 (Figur 1) an einer der Fluidleitungen gesaugt, öffnet die Ventileinheit 10, das hier als Rückschlagventil im Filtersystem 100 (Figur 1) dient. Der Verschlussabschnitt 30 würde bei einem Filtersystem 100 nach Figur 1 nach unten öffnen.

Bei Überdruck oder Druckausgleich ist die Ventileinheit 10 geschlossen. Das im montierten Zustand nach unten wirkende Eigengewicht des Verschlussabschnitts 30 löst diesen nicht vom Ventilsitz 122 ab.

Der Verbindungsabschnitt 40 ist mit dem Filterkopf 120 verbunden, wobei die Ventileinheit 10 an einem Befestigungszapfen 124 des Filterkopfs 120 festgelegt ist, insbesondere verklemmt ist, und an einem Zapfen 136 des Filterkopfs 120 in Position gehalten wird.

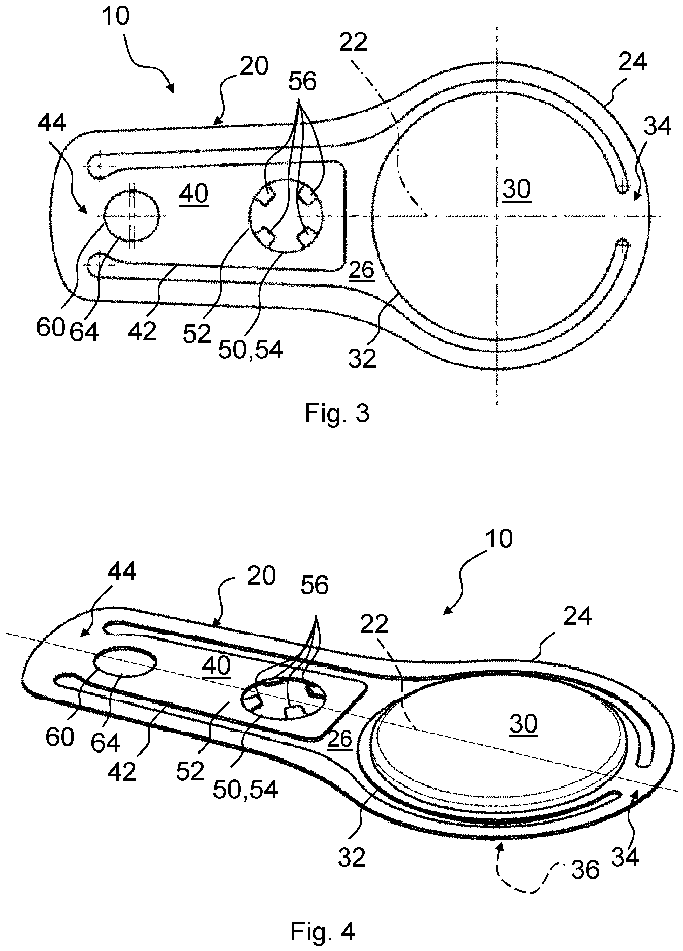

Figur 3 zeigt eine Draufsicht auf einen Ventilkörper 20 einer Ventileinheit 10 nach einem Ausführungsbeispiel der Erfindung. Figur 4 zeigt eine perspektivische Ansicht der Ventileinheit 10 mit einem Ventilkörper 20 nach Figur 3 mit einem mit Elastomer umspritzten Verschlussabschnitt 30.

Der plattenförmige Ventilkörper 20 weist einen Rahmen 24 auf, der einen Durchbruch 26 umschließt. Der Verschlussabschnitt 30 weist eine Verschlusslasche 32 auf, die ausgehend von einem ersten Befestigungsabschnitt 34 am Rahmen 24 in den Durchbruch 26 ragt. Die Verschlusslasche 32 ist in diesem Beispiel kreisrund ausgebildet.

Der erste Befestigungsabschnitt 34 und der zweite Befestigungsabschnitt 44 sind entlang einer Längsachse 22 des Ventilkörpers 20 sich am Rahmen 24 gegenüberliegend angeordnet.

Der Verbindungsabschnitt 40 weist eine Kontaktlasche 42 auf, die ausgehend von einem zweiten Befestigungsabschnitt 44 am Rahmen 24 in den Durchbruch 26 ragt. Die Kontaktlasche 42 ist in diesem Beispiel in etwa als Rechteck ausgebildet.

Die Kontaktlasche 42 weist einen Befestigungspunkt 50 auf, an dem die Ventileinheit 10 mit dem den Befestigungspunkt 50 umgebenden Kontaktbereich 52 am Filterkopf 120 befestigt werden kann. In diesem Beispiel ist der Befestigungspunkt 50 als Durchgangsöffnung 54 ausgebildet, welche nach innen weisende Zähne 56 aufweist. Damit kann die Ventileinheit auf einem entsprechenden Befestigungszapfen 124 (Figur 2) festgeklemmt werden. Die Kontaktlasche 42 weist ferner einen Positionierbereich 60 auf, mit dem die Ventileinheit 10 in einer vorgegebenen Richtung positioniert sein kann. Der Befestigungspunkt 50 und der Positionierbereich 60 sind auf der Längsachse 22 angeordnet.

Der Positionierbereich 60 ist als Durchgangsöffnung 64 ausgebildet, wobei die Durchgangsöffnung 64 als Langloch ausgebildet ist, das sich mit seiner längeren Achse entlang der Längsachse 22 erstreckt. Dies erlaubt ein ausreichendes Spiel bei einer Auslenkung der Kontaktlasche 42 bezüglich des Rahmens 24.

Die Verschlusslasche 32 und die Kontaktlasche 42 können unterhalb oder oberhalb des Rahmens 24 ausgelenkt werden und können in der Art von Blattfedern wirken.

Wie aus Figur 4 zu entnehmen ist, kann die Verschlusslasche 30 mit einem Material versehen sein, das einen Dichtkörper 36 bildet, der in der Figur unterhalb der Verschlusslasche 32 angeordnet ist. Vorteilhaft kann die Verschlusslasche 32 mit dem Material umspritzt sein.

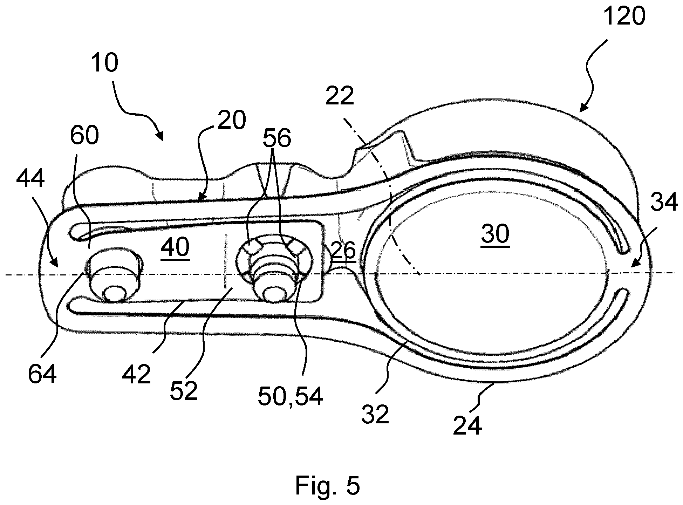

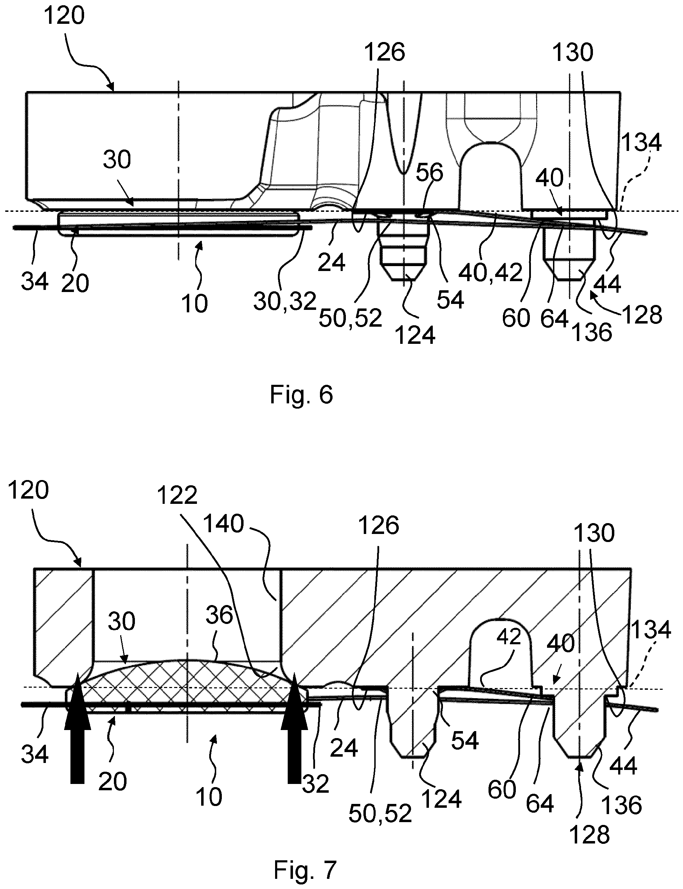

Figur 5 zeigt eine perspektivische Draufsicht auf einen Ausschnitt aus dem Filterkopf 120 nach Figur 2 mit Ventileinheit 10, während Figur 6 eine Seitenansicht des Ausschnitts des Filterkopfs 120 mit Ventileinheit nach Figur 5 zeigt und Figur 7 einen Längsschnitt durch den Ausschnitt des Filterkopfs 120 mit Ventileinheit 10 nach Figur 5 zeigt.

Der Filterkopf 120 weist einen Befestigungszapfen 124 auf, an dem die Ventileinheit 10 über ihre Kontaktlasche 42 am Befestigungspunkt 50 befestigt ist. Die Kontaktlasche 42 der Ventileinheit 10 wird über die Durchgangsöffnung 64 ihres Positionierbereichs 60 an einem Zapfen 136 des Filterkopfs 120 positioniert.

Im Bereich der Ventileinheit 10 weist der Filterkopf 120 eine Oberflächenebene 134 auf, die in den Figuren 6 und 7 als unterbrochene Linie symbolisiert ist. Der Befestigungszapfen 124 hat seine Basis 126 in dieser Oberflächenebene 134, während der Zapfen 136 eine Basis 130 aufweist, die weiter von der Oberflächenebene 134 absteht. Dabei wird die Ventileinheit 10 mit ihrer Durchgangsöffnung 54 so auf den Befestigungszapfen 124 aufgeschoben, dass der Kontaktbereich 52 mit der Basis 126 des Befestigungszapfens 124 des Filterkopfs 120 in Berührung kommt. Dagegen liegt ein Teil des Bereichs der Kontaktlasche 42 nahe des Befestigungsabschnitts 44 an der Basis 130 des Zapfens 136 auf, die einen Kontaktbereich 128 bildet, so dass der Rahmen 24 in diesem Kontaktbereich 128 weiter von der Oberflächenebene 134 absteht als der Kontaktbereich 52 der Kontaktlasche 42. Die Kontaktlasche 42 ragt nach oben aus dem Rahmen 24 heraus. Durch die Verformung der Kontaktlasche 42 wird eine Vorspannung im Bereich des Verschlussabschnitts 30 bzw. der Verschlusslasche 32 bewirkt, die mit ihrem Dichtkörper 36 am Ventilsitz 122 des Filterkopfs 120 anliegt und die Öffnung einer Fluidleitung 140 verschließt. Die Stirnseite des Ventilsitzes 122 liegt ebenfalls in der Oberflächenebene 134. Durch die Vorspannung kann erreicht werden, dass die Verschlusslasche 32 nicht durch das Eigengewicht von Verschlusslasche 32 mit Dichtkörper 36 nach unten absinkt und ungewollt den Ventilsitz 122 freigibt. Die Vorspannung ist mit zwei nach oben ragenden dicken Pfeilen an der Verschlusslasche 32 angedeutet.

Dadurch, dass der Dichtkörper 36 auf der federnden Verschlusslasche 32 angeordnet ist, kann dieser den Ventilsitz 122 rundum kontaktieren und abdichten. Wie in der Figur 7 zu erkennen ist, ist die Verschlusslasche 32 parallel zur Oberflächenebene 134 und ragt nach unten aus dem Rahmen 24 heraus. Bei einem Ventilkörper 20 aus Metall ist der Verschlussabschnitt 30 mit dem Dichtkörper besonders stabil gelagert.

## Patentansprüche

1. Ventileinheit (10), mit einem plattenförmigen Ventilkörper (20), der einen Verschlussabschnitt (30) und einen Verbindungsabschnitt (40) aufweist,
wobei der Ventilkörper (20) einen Rahmen (24) umfasst, der einen Durchbruch (26) im Ventilkörper (20) umschließt,
wobei der Verschlussabschnitt (30) eine Verschlusslasche (32) aufweist, die ausgehend von einem ersten Befestigungsabschnitt (34) am Rahmen (24) in den Durchbruch (26) ragt,
wobei der Verbindungsabschnitt (40) eine Kontaktlasche (42) aufweist und ausgehend von einem zweiten Befestigungsabschnitt (44) am Rahmen (24) in den Durchbruch (26) ragt, und der Verbindungsabschnitt (40) wenigstens einen Befestigungspunkt (50) aufweist, und
wobei der erste Befestigungsabschnitt (34) und der zweite Befestigungsabschnitt (44) entlang einer Längsachse (22) des Ventilkörpers (20) sich am Rahmen (24) gegenüberliegend angeordnet sind.

2. Ventileinheit (10) nach Anspruch 1, wobei der wenigstens eine Befestigungspunkt (50) des Verbindungsabschnitts (40) auf der Längsachse (22) angeordnet ist.

3. Ventileinheit (10) nach Anspruch 1 oder 2, wobei der wenigstens eine Befestigungspunkt (50) als Durchgangsöffnung (54) ausgebildet ist, insbesondere wobei der wenigstens eine Befestigungspunkt (50) eine als Klemmelement ausgebildete Durchgangsöffnung (54) aufweist.

4. Ventileinheit (10) nach einem der vorhergehenden Ansprüche, wobei der Verbindungsabschnitt (40) wenigstens einen Positionierbereich (60) aufweist, der insbesondere auf der Längsachse (22) angeordnet ist.

5. Ventileinheit (10) nach Anspruch 4, wobei der Positionierbereich (60) als Durchgangsöffnung (64) ausgebildet ist, insbesondere wobei der Positionierbereich (60) als Durchgangsöffnung (64) ausgebildet ist, die sich insbesondere entlang der Längsachse (22), als Langloch erstreckt.

6. Ventileinheit (10) nach einem der vorhergehenden Ansprüche, wobei der Ventilkörper (20) aus Metall gebildet ist.

7. Ventileinheit (10) nach einem der vorhergehenden Ansprüche, wobei der Verschlussabschnitt (30) einen Dichtkörper (36), insbesondere aus einem Elastomer, aufweist, der an der Verschlusslasche (32) oder um die Verschlusslasche (32) herum angeordnet ist, insbesondere angespritzt ist.

8. Filterkopf (120) mit einer Ventileinheit (10) nach einem der vorhergehenden Ansprüche, umfassend einen Ventilsitz (122) zum Anlegen eines Dichtkörpers (36) eines Verschlussabschnitts (30) der Ventileinheit (10), einen Befestigungszapfen (124) zur Befestigung eines Verbindungsabschnitts (40) der Ventileinheit (10), sowie einen Kontaktbereich (128) für einen Positionierbereich (60) der Ventileinheit (10).

9. Filterkopf (120) nach Anspruch 8, wobei der Kontaktbereich (128) eine Basis (130) für den Positionierbereich (60) der Ventileinheit (10) aufweist, die von einer der Ventileinheit (10) im montierten Zustand bestimmungsgemäß zugewandten Oberfläche (134) weiter absteht als eine Basis (126) des Befestigungszapfens (124), an der der Verbindungsabschnitt (40) im Kontaktbereich (52) seines Befestigungspunkts (50) bestimmungsgemäß zur Anlage kommt.

10. Filterkopf (120) nach Anspruch 8 oder 9, wobei bei bestimmungsgemäßer Montage der Ventileinheit (10) und verschlossenem Ventilsitz (122) eine Verschlusslasche (32) des Verschlussabschnitts (30) und eine Lasche des Verbindungsabschnitts (40) zu verschiedenen Seiten des Rahmens (24) ausgelenkt sind.

11. Filtersystem (100) mit einem Gehäuse (110), in dem eine Ventileinheit (10) nach einem der Ansprüche 1 bis 7 oder ein Filterkopf (120) nach einem der Ansprüche 8 bis 9 angeordnet sind.

12. Filtersystem (100) nach Anspruch 11, das zur Verwendung als Vorfilter in einem Brennstoffversorgungssystem vorgesehen ist.

## Claims

1. Valve unit (10), having a plate-shaped valve body (20) featuring a closing section (30) and a connecting section (40),
wherein the valve body (20) comprises a frame (24) enclosing an opening (26) in the valve body (20),
wherein the closing section (30) features a closure tab (32) projecting into the opening (26) from a first attachment portion (34) on the frame (24),
wherein the connecting section (40) features a contact tab (42) projecting into the opening (26) from a second attachment portion (44) on the frame (24), and the connecting section (40) features at least one attachment point (50), and
wherein the first attachment portion (34) and the second attachment portion (44) are oppositely disposed on the frame (24) along a longitudinal axis (22) of the valve body (20).

2. Valve unit (10) according to claim 1, wherein the at least one attachment point (50) of the connecting section (40) is disposed on the longitudinal axis (22).

3. Valve unit (10) according to claim 1 or 2, wherein the at least one attachment point (50) is designed as through-opening (54), in particular wherein the at least one attachment point (50) features a through opening (54) designed as clamping element.

4. Valve unit (10) according to one of the preceding claims, wherein the connecting section (40) features at least one positioning area (60) in particular disposed on the longitudinal axis (22).

5. Valve unit (10) according to claim 4, wherein the positioning area (60) is designed as through-opening (64), in particular wherein the positioning area (60) is designed as through opening (64) which extends in particular along the longitudinal axis (22) as a long hole.

6. Valve unit (10) according to one of the preceding claims, wherein the valve body (20) is made of metal.

7. Valve unit (10) according to one of the preceding claims, wherein the closing section (30) features a sealing element (36), in particular made of an elastomer which is disposed on the closure tab (32) or around the closure tab (32), in particular injection-molded.

8. Filter head (120) having a valve unit (10) according to one of the preceding claims, comprising a valve seat (122) for applying a sealing element (36) of a closing section (30) of the valve unit (10), a fixing pin (124) for attaching a connecting section (40) of the valve unit (10), as well as a contact area (128) for a positioning area (60) of the valve unit (10).

9. Filter head (120) according to claim 8, wherein the contact area (128) features a base (130) for the positioning area (60) of the valve unit (10), which base projects further from a surface (134) intended to face the valve unit (10) in the assembled state than a base (126) of the fixing pin (124) onto which the connecting section (40) is intended to come into contact in the contact area (52) of its attachment point (50).

10. Filter head (120) according to claim 8 or 9, wherein when the valve unit (10) is assembled as intended and the valve seat (122) is closed, a closure tab (32) of the closure section (30) and a tab of the connecting section (40) are deflected to different sides of the frame (24).

11. Filter system (100) having a housing (110) in which a valve unit (10) according to one of the claims 1 to 7 or a filter head (120) according to one of the claims 8 to 9 is disposed.

12. Filter system (100) according to claim 11 which is provided for use as a prefilter in a fuel supply system.

## Revendications

1. Unité de soupape (10), ayant un corps de soupape (20) en forme de plaque présentant une section de fermeture (30) ainsi qu'une section de raccordement (40),
dans laquelle le corps de soupape (20) comprend un cadre (24) entourant un passage (26) dans le corps de soupape (20),
dans laquelle la section de fermeture (30) présente une patte de fermeture (32) qui, en partant d'une première section de fixation (34) sur le cadre (24), fait saillie dans le passage (26),
dans laquelle la section de raccordement (40) présente une patte de contact (42) et, en partant d'une seconde section de fixation (44) sur le cadre (24), fait saillie dans le passage (26), et la section de raccordement (40) présente au moins un point de fixation (50), et
dans laquelle la première section de fixation (34) et la seconde section de fixation (44) sont disposées de manière opposée sur le cadre (24) le long d'un axe longitudinal (22) du corps de soupape (20).

2. Unité de soupape (10) selon la revendication 1, dans laquelle le point de fixation (50), au moins au nombre d'un, de la section de raccordement (40) est disposé sur l'axe longitudinal (22).

3. Unité de soupape (10) selon la revendication 1 ou 2, dans laquelle le point de fixation (50), au moins au nombre d'un, est conçu en tant qu'ouverture de passage (54), notamment dans laquelle le point de fixation (50), au moins au nombre d'un, présente une ouverture de passage (54) conçue en tant qu'élément de serrage.

4. Unité de soupape (10) selon l'une quelconque des revendications précédentes, dans laquelle la section de raccordement (40) présente au moins une zone de positionnement (60) notamment disposée sur l'axe longitudinal (22).

5. Unité de soupape (10) selon la revendication 4, dans laquelle la zone de positionnement (60) est conçue en tant qu'ouverture de passage (64), notamment dans laquelle la zone de positionnement (60) est conçue en tant qu'ouverture de passage (64) qui s'étend en tant que trou oblong notamment le long de l'axe longitudinal (22).

6. Unité de soupape (10) selon l'une quelconque des revendications précédentes, dans laquelle le corps de soupape (20) est en métal.

7. Unité de soupape (10) selon l'une quelconque des revendications précédentes, dans laquelle la section de fermeture (30) présente un corps d'étanchéité (36), notamment en élastomère, disposé sur la patte de fermeture (32) ou autour de la patte de fermeture (32), notamment moulé par injection.

8. Tête de filtre (120) ayant une unité de soupape (10) selon l'une quelconque des revendications précédentes, comprenant un siège de soupape (122) pour appliquer un corps d'étanchéité (36) d'une section de fermeture (30) de l'unité de soupape (10), une broche de fixation (124) pour attacher une section de raccordement (40) de l'unité de soupape (10), et une zone de contact (128) pour une zone de positionnement (60) de l'unité de soupape (10).

9. Tête de filtre (120) selon la revendication 8, dans laquelle la zone de contact (128) présente une base (130) pour la zone de positionnement (60) de l'unité de soupape (10), base qui fait saillie plus loin d'une surface (134) tournée vers l'unité de soupape (10) à l'état monté conformément à son utilisation qu'une base (126) de la broche de fixation (124), base sur laquelle la section de raccordement (40) vient en appui conformément à son utilisation dans la zone de contact (52) de son point de fixation (50).

10. Tête de filtre (120) selon la revendication 8 ou 9, dans laquelle, lorsque l'unité de soupape (10) est montée conformément à son utilisation et que le siège de soupape (122) est fermé, une patte de fermeture (32) de la section de fermeture (30) et une patte de la section de raccordement (40) sont déviées vers différents côtés du cadre (24).

11. Système de filtre (100) ayant un boîtier (110), dans lequel sont disposées une unité de soupape (10) selon l'une quelconque des revendications 1 à 7 ou une tête de filtre (120) selon l'une quelconque des revendications 8 à 9.

12. Système de filtre (100) selon la revendication 11 prévu pour l'utilisation en tant que préfiltre dans un système d'approvisionnement en combustible.
